# EUROPEAN PATENT SPECIFICATION

(11) **EP 4 317 614 B1**
(45) Date of publication and mention of the grant of the patent: **09.12.2026**
(21) Application number: 22780098.4
(22) Date of filing: 15.03.2022
(51) Int. Cl.: E02F 9/24, E02F 9/20, E02F 9/26

(54) **WORK MACHINE CONTROL SYSTEM**
STEUERUNGSSYSTEM FÜR EINE ARBEITSMASCHINE
SYSTÈME DE COMMANDE D'UNE MACHINE DE TRAVAIL

(30) Priority: 02.04.2021 JP 2021063303
(43) Date of publication of application: 07.02.2024
(73) Proprietor: Hitachi Construction Machinery Co., Ltd., Tokyo 110-0015 (JP)
(72) Inventor: YAMAMOTO, Shinjiro, Tsuchiura-shi, Ibaraki 300-0013 (JP); IMURA, Shinya, Tsuchiura-shi, Ibaraki 300-0013 (JP); SHIWAKU, Koji, Tsuchiura-shi, Ibaraki 300-0013 (JP); ISHII, Hiroki, Tsuchiura-shi, Ibaraki 300-0013 (JP)
(74) Representative: MERH-IP Matias Erny Reichl Hoffmann Patentanwälte PartG mbB
(86) International application number: PCT/JP2022/011747
(87) International publication number: WO 2022/209878

(56) References cited:
- EP-A1- 3 882 403
- WO-A1-2020/032267
- JP-A- 2019 065 657
- JP-A- 2019 167 732
- US-A1- 2017 218 981
- US-A1- 2020 063 398

## Description

### Technical Field

The present invention relates to a work machine control system.

### Background Art

In a work machine comprising a work device, productivity can be enhanced by automating works. In a technique described in Patent Literature 1, a series of works executed by a work machine is configured as a task and the work machine operates in accordance with the task.

### Citation List

### Patent Literature

Patent Literature 1: JP 5110741 B
Patent Literature 2: WO 2020/032267 A1

### Summary of Invention

### Technical Problem

However, in conventional techniques, there is a problem that it is difficult for a worker (manual worker) to perform a work in the vicinity of a work machine executing a task automatically.

In a work machine operated by an operator on board, the operator and a manual worker perform work while communicating. However, in a work machine executing the task automatically as described in Patent Literature 1, the manual worker cannot communicate with the machine, so the manual worker does not know how the machine moves and cannot go near even if the manual worker wants to perform work in the vicinity, so there is possibility that workability is reduced. Also, if the work machine executes a movement different than expected by the manual worker, there is a risk that the manual worker and the work machine come into contact.
Patent Literature 2 discloses a shovel comprising operation elements, a gesture recognition unit configured to recognize a nearby worker and detect a predetermined gesture made by the worker, and an operation control unit that performs operation control of the operation elements in response to the predetermined gesture recognized by the gesture recognition unit.

The present invention is made in order to solve such problems and an object is to provide a work machine control system facilitating a worker to perform work more easily in the vicinity of a work machine executing a task automatically.

### Solution to Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. An example of a work machine control system related to the present invention comprises:
a work machine that executes a task automatically as a work to be executed; and
a task control device for controlling execution of the task,
wherein the work machine comprises a vehicle body control device and a hydraulic actuator used for executing the task,
wherein the vehicle body control device comprises:
   a task content input section for receiving input of task content information;
   a movement control section for calculating a speed instruction of the hydraulic actuator based on the task content information;
   a receiving section for receiving task control information outputted from the task control device having a task control input section for receiving input of the task control information; and
   a task control section for controlling execution of the task based on the task control information.

The present description is based on disclosure of Japanese Patent Application No. 2021-063302.

### Advantageous Effects of Invention

According to the work machine control system related to the present invention, a worker can perform work more easily in the vicinity of a work machine executing a task automatically. For example, the manual worker can control execution of the task of the work machine, so the manual worker can perform the work close to the work machine, thereby enhancing productivity and safety.

### Brief Description of Drawings

Fig. 1 is a diagram showing an appearance of a work machine according to a first embodiment of the present invention.
Fig. 2 is a diagram showing an appearance of a task control device according to the first embodiment of the present invention.
Fig. 3 is a diagram showing a system configuration according to the first embodiment of the present invention.
Fig. 4 is a diagram showing a control flow according to the first embodiment of the present invention.
Fig. 5 is a diagram showing a system configuration according to a second embodiment of the present invention.
Fig. 6 is a diagram showing a control flow according to the second embodiment of the present invention.
Fig. 7 is a diagram showing a system configuration according to a third embodiment of the present invention.

### Description of Embodiments

Embodiments of the present invention will be explained below based on the attached drawings.

### [First Embodiment]

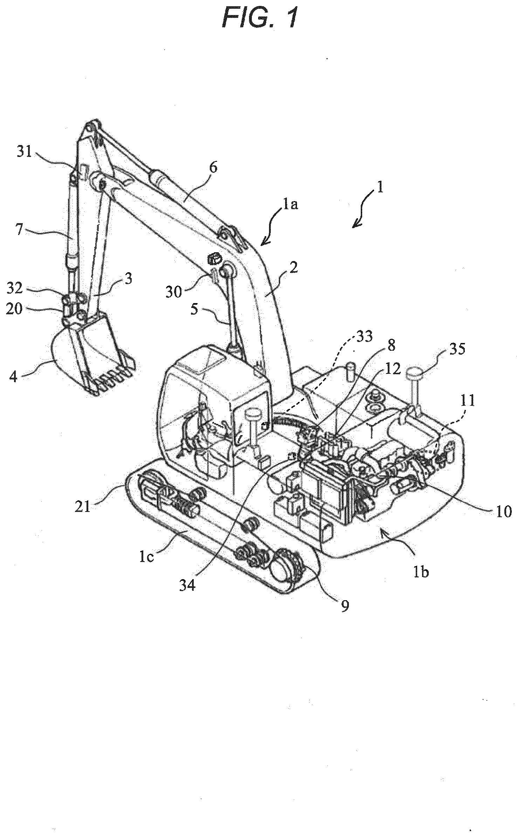

A first embodiment of a work machine control system according to the present invention will be explained with reference to Figs. 1-4.

Fig. 1 is a diagram showing an appearance of a work machine 1 according to the first embodiment of the present invention. A work machine control system comprises the work machine 1. The work machine 1 can operate automatically by executing a task.

The work machine 1 comprises a front work device 1a, a top rotary body 1b and a bottom traveling body 1c. The front work device 1a comprises a boom 2, an arm 3 and a bucket 4. It is constructed so that the boom 2 is driven by a boom cylinder 5, the arm 3 is driven by an arm cylinder 6 and the bucket 4 is driven by a bucket cylinder 7 via a bucket link 20. The boom cylinder 5, the arm cylinder 6 and the bucket cylinder 7 are examples of hydraulic actuators. The work machine 1 may comprise other hydraulic actuators. The hydraulic actuators are used in order to execute the task.

The top rotary body 1b is constructed to be rotatable with respect to the bottom traveling body 1c and can be rotated by a rotation device 8. Caterpillars 21 are provided at the left and the right of the bottom traveling body 1c and they are constructed to be driven respectively by traveling devices 9 (only the left side is shown).

At the.top rotary body 1b, a motor 10, a hydraulic pump 11 driven by the motor 10 and a control valve 12 that distributes pressure oil from the hydraulic pump 11 to the boom cylinder 5, the arm cylinder 6, the bucket cylinder 7, the rotation device 8 and the traveling devices 9.

In order to detect an attitude of the front work device 1a, a boom angle sensor 30 is provided at the boom 2, an arm angle sensor 31 is provided at the arm 3 and a bucket angle sensor 32 is provided at the bucket link 20.

On the top rotary body 1b, provided are a vehicle body inclination angle sensor 33 for detecting an inclination angle of the top rotary body 1b, a rotation angle sensor 34 for detecting a relative angle between the top rotary body 1b and the bottom traveling body 1c and a GNSS antenna 35 for detecting a position and an orientation of the top rotary body 1b.

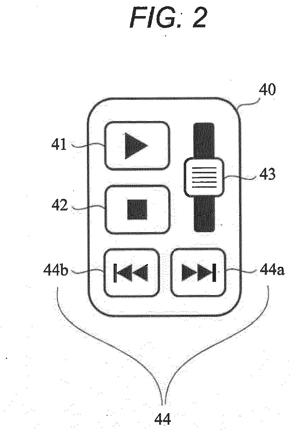

Fig. 2 is a diagram showing an appearance of a task control device according to the first embodiment of the present invention. The task control device 40 is a device for controlling execution of a task. The work machine control system comprises the task control device 40.

The task control device 40 comprises a start instruction input device 41 for receiving input of a start instruction of a task, a stop instruction input device 42 for receiving input of a stop instruction of a task, a speed instruction input device 43 for receiving input of a speed instruction of a task, and a task switching input device 44 for receiving input of a task switching instruction for switching tasks. The task switching input device 44 comprises a forward switching button 44a and a reverse switching button 44b.

The start instruction input device 41, the stop instruction input device 42 and the task switching input device 44 are, for example, pushbuttons and constructed so that ON/OFF can be inputted. The speed instruction input device 43 is, for example, a slidable lever and any value can be inputted.

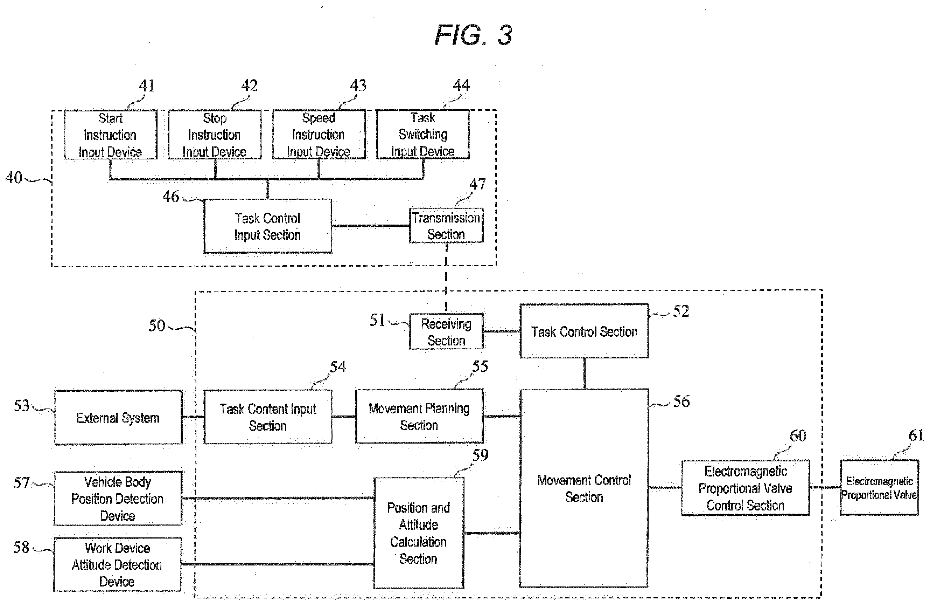

Fig. 3 is a diagram showing a system configuration according to the first embodiment of the present invention. The task control device 40 comprises: a task control input section 46 for receiving input of task control information from the start instruction input device 41, the stop instruction input device 42, the speed instruction input device 43 and the task switching input device 44; and a transmission section 47 for transmitting the task control information inputted to the task control input section 46.

The task control information may include the above start instruction of the task, the stop instruction of the task, the speed instruction of the task, the task switching instruction, etc.

The work machine 1 comprises a vehicle body control device 50, a vehicle body position detection device 57, a work device attitude detection device 58 and an electromagnetic proportional valve 61 shown in Fig. 3. Also, an external system 53 is provided in relation to the work machine 1.

The vehicle body control device 50 comprises a receiving section 51 for receiving the task control information transmitted (outputted) from the task control device 40 and a task control section 52 for controlling execution of the task based on the task control information received at the receiving section 51.

The vehicle body control device 50 comprises a position and attitude calculation section 59. The vehicle body position detection device 57 and the work device attitude detection device 58 are connected to the position and attitude calculation section 59. The position and attitude calculation section 59 calculates a position and an attitude of the work machine 1.

The vehicle body control device 50 further comprises a task content input section 54, a movement planning section 55, a movement control section 56 and an electromagnetic proportional valve control section 60. The task content input section 54 is connected to the external system 53 and receives input of task content information representing content of the task. The movement planning section 55 plans movement of the vehicle body based on the task content information and generates movement plan information.

The movement control section 56 calculates a speed instruction of the hydraulic actuators based on the movement plan information and the position and the attitude of the vehicle body calculated by the position and attitude calculation section 59. Here, the movement plan information is generated based on the task content information as described above, so it can be said that the movement control section 56 calculates the speed instruction of the hydraulic actuators based on the task content information.

The electromagnetic proportional valve control section 60 controls the electromagnetic proportional valve 61 in accordance with the speed instruction from the movement control section 56. The electromagnetic proportional valve control section 60 is connected to the electromagnetic proportional valve 61 so that the work machine 1 can be moved in response to the task by controlling the electromagnetic proportional valve 61. Note that the electromagnetic proportional valve 61 is used for controlling the hydraulic actuators.

A task means, for example, a work to be executed by the work machine 1. Specific examples include "dig earth", "travel and move to a destination", etc. The task content information includes, information identifying such work, information representing the spot where the work should be done, etc. The task content information may include information related to a plurality of tasks.

The movement plan information means specific movement of each portion of the work machine for executing the task. For example, movement plan information related to the task "dig earth" includes information indicating movement of the bucket for putting the dug earth into the bucket. Also, for example, movement plan information related to the task "travel and move to a destination" includes information indicating movement of the traveling devices 9 for traveling.

. The above are mere examples and those skilled in the art can define content and format of the task content information and the movement plan information at will. Note that, although in the present embodiment the movement plan information is generated based on the task content information, it is not required that the task content information and the movement plan information are distinguished clearly. For example, if the task content information includes information indicating movement of each portion of the work machine, a portion of the task content information or an entire portion thereof may be used as it is as the movement plan information.

The task control section 52 is connected to the movement control section 56. The movement control section 56 is so constructed that it can change configuration related to execution of the task upon sending an instruction to the electromagnetic proportional valve control section 60 in accordance with the instruction from the movement planning section 55 referring to the task control information from the task control section 52.

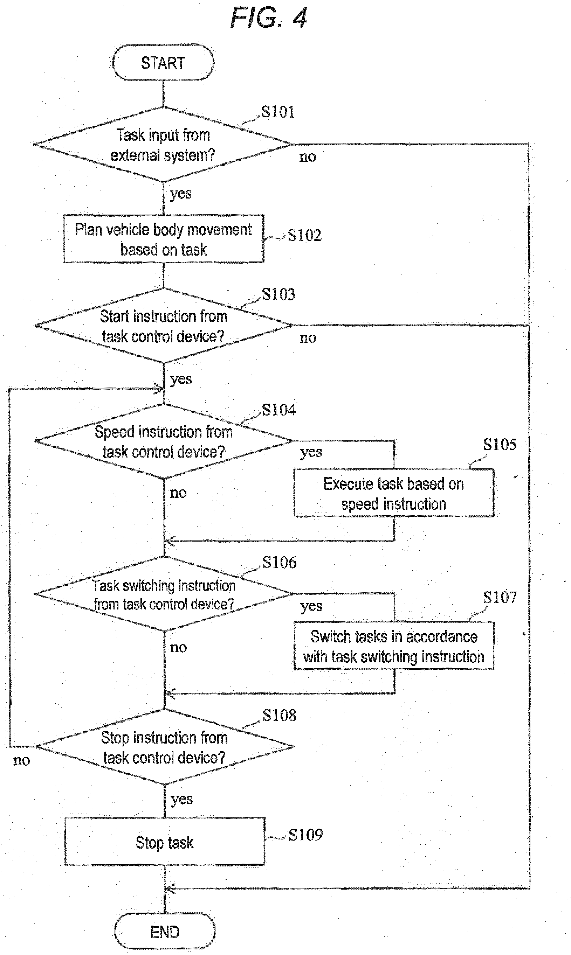

Fig. 4 is a diagram showing a control flow according to the first embodiment of the present invention. This control flow is, for example, executed by the vehicle body control device 50.

In the process of Fig. 4, in S101, it is confirmed whether the task content information is inputted from the external system 53. If the task content information is not inputted, the process is terminated. If the task content information is inputted, the movement plan information of the vehicle body based on the task content information is generated in S102.

In S103, it is confirmed whether the start instruction of the task is received from the task control device 40. If the start instruction is not received, the process of Fig. 4 is terminated. If the start instruction is received, the task control section 52 starts execution of the task. In the present embodiment, to execute a task means, for example, to execute movement of each portion of the work machine represented by the movement plan information.

After the execution of the task is started, in S104, it is confirmed whether the speed instruction of the task is received.

If the speed instruction is received, the task is executed in accordance with the speed instruction in S105. That is, the task control section 52 controls the execution speed of the task based on the speed instruction regarding the task being executed. If the speed instruction is not received, S105 is not executed.

Those skilled in the art can design how the execution speed of the task should be realized as needed, but for example, the execution speed of the task can be changed by changing movement speed of the boom 2, the arm 3 and the bucket 4.

In S106, it is confirmed whether the task switching instruction is received from the task control device 40. If the task switching instruction is received, the task control section 52 switches the tasks in S107 in accordance with the task switching instruction. For example, if a plurality of tasks can be distinguished by task identification numbers and the task switching instruction indicates that the forward switching button 44a is operated, execution of the task being executed at present is stopped and execution of the task with the task identification number greater by one is started. Similarly, if the task switching instruction indicates that the reverse switching button 44b is operated, execution of the task being executed at present is stopped and execution of the task with the task identification number smaller by one is started.

Those skilled in the art can design control required upon switching the tasks (such as how the movement being executed at that time should be processed) as needed. Note that, if the task switching instruction is not received, S107 is not executed.

In S108, it is confirmed whether the stop instruction of the task is received from the task control device 40. If the stop instruction is received, the task control section 52 stops execution of the task in S109 and the process of Fig. 4 is terminated. To stop execution of a task means, for example, to stop movement of all hydraulic actuators in the work machine 1. If the stop instruction is not received, the process goes back to S104 and execution of the task continues.

Although this is not shown in Fig. 4, if execution of the movement plan related to the task is completed, the process of Fig. 4 may be terminated.

According to the work machine control system of the first embodiment above, the work machine 1 can perform work automatically in accordance with the task inputted from the external system 53. In addition, the task can be executed in accordance with the task control information from the task control device 40.

If the manual worker performing work in the vicinity of the work machine 1 holds the task control device 40, the manual worker can instruct the timing that the work machine 1 starts execution of the task, the execution speed of the task, switching of the tasks and stopping of the task in real time. Accordingly, the manual worker can come close to the work machine 1 while controlling movement of the work machine 1, so the manual worker can come close to the work machine 1 without being afraid, so productivity of work can also be enhanced. Thus, the worker can perform work more easily in the vicinity of work machine 1 executing the task automatically.

### [Second Embodiment]

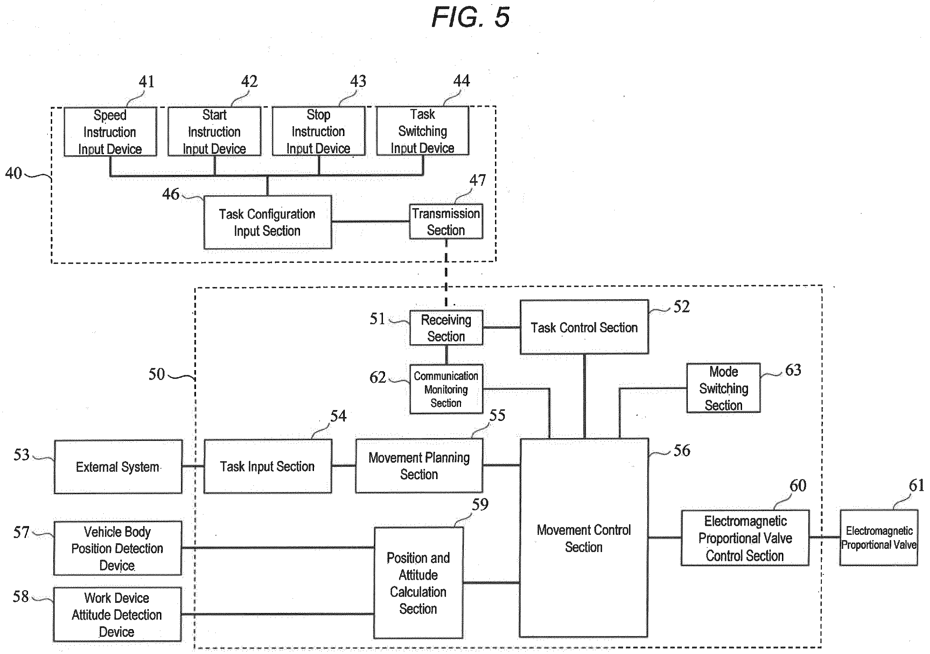

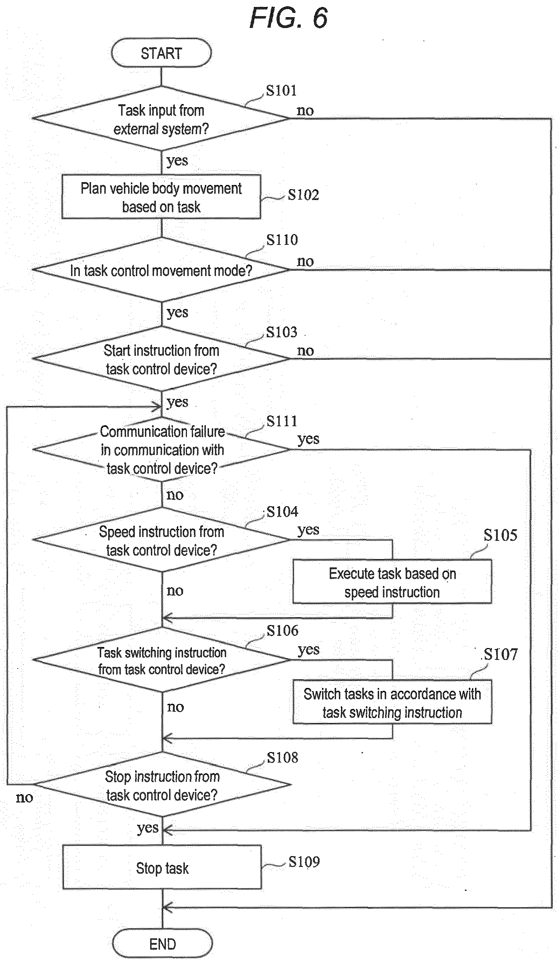

A second embodiment of a work machine control system according to the present invention will be explained with reference to Figs. 5 and 6. Explanation may be omitted for portions common to the first embodiment.

Fig. 5 is a diagram showing a system configuration according to the second embodiment of the present invention. The vehicle body control device 50 further comprises a communication monitoring section 62 and a mode switching section 63.

The communication monitoring section 62 is connected to the receiving section 51, monitors communication condition of the task control information and can determine the communication condition of the task control information. The communication condition is, for example, represented by whether there is communication failure. An example of failure is a condition wherein communication is broken down. The communication monitoring section 62 is also connected to the movement control section 56 and can communicate the communication condition to the movement control section 56. If it is determined that there is communication failure in communication of the task control information, the movement control section 56 stops execution of the task.

In the present embodiment, the work machine 1 can move selectively in any of a plurality of movement modes. One of the movement modes is a task control movement mode. In this movement mode, the work machine 1 moves based on the task control information. For example, it starts execution of the task in response to the start instruction of the task and stops execution of the task in response to the stop instruction of the task.

Also, one of the movement modes may be a non-task-control movement mode. In this movement mode, the work machine 1 may move regardless of the task control information. For example, it starts execution of the task in response to the task content information being inputted and stops execution of the task in response to completion of execution of the movement plan related to the task.

The mode switching section 63 is connected to the movement control section 56 and configured so that it can switch whether the task control movement mode is set wherein the task is executed in accordance with the task control information. That is, the mode switching section 63 can switch the movement mode of the work machine 1 to the task control movement mode and another mode. The mode switching section 63 may comprise an input device such as a button provided at the work machine 1.

Fig. 6 is a diagram showing a control flow according to the second embodiment of the present invention. Compared with Fig. 4 (the first embodiment), S110 and S111 are added.

After S102, in S110, it is confirmed whether the movement mode of the work machine 1 is the task control movement mode. If it is the task control movement mode, the process proceeds to S103. If not, the process of Fig. 6 is terminated.

After S103, in S111, communication condition with the task control device 40 is confirmed. If it is determined that there is communication failure in communication of the task control information, the movement control section 56 stops execution of the task in S109. If not, the process proceeds to S104.

According to the work machine control system of the second embodiment above, the communication condition between the task control device 40 and the vehicle body control device 50 is confirmed, and if there is communication failure, execution of the task is stopped. Accordingly, it is avoided that the work machine 1 cannot be stopped by communication breakdown or that work machine 1 executes an unexpected movement.

Also, by switching the task control movement mode, the work machine 1 can be moved regardless of the task control information. For example, the work machine 1 can be moved based on receiving the task content information even without any instruction from the task control device.

### [Third Embodiment]

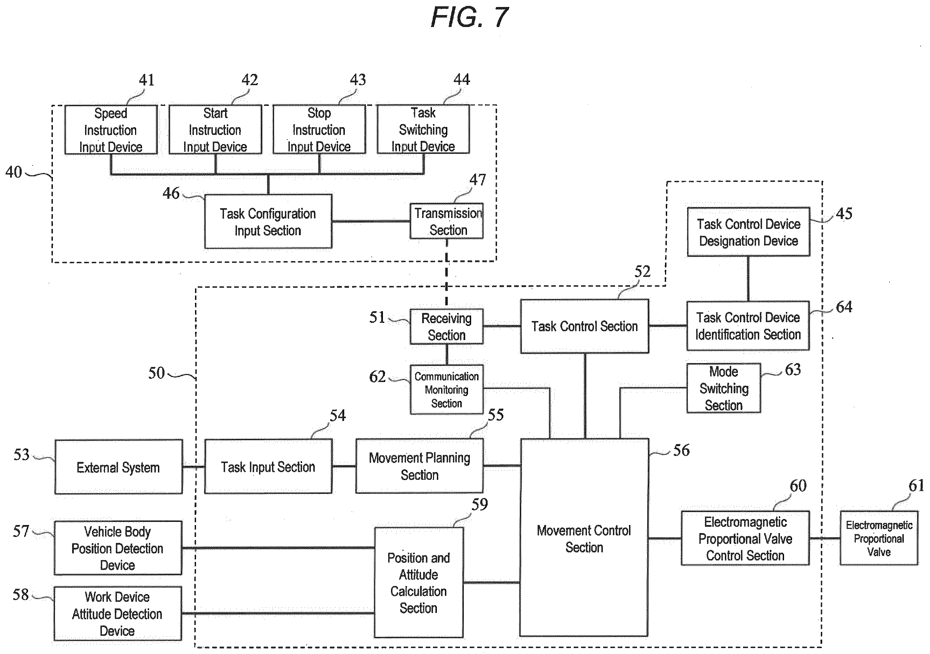

A third embodiment of a work machine control system according to the present invention will be explained with reference to Fig. 7. Explanation may be omitted for portions common to the first or the second embodiment.

As the task control device 40 according to the third embodiment, one similar to that in Fig. 2 may be used. The work machine 1 is provided with a task control device designation device 45. The task control device designation device 45 can designate a task control device 40 to be a target of task control.

Also, in the present embodiment, the task control information includes task control device identification information for identifying the task control device. For example, in a case wherein a plurality of task control devices are distinguished by the task control device identification information, each task control device transmits the task control information including the task control device identification information for identifying the task control device. The work machine can be configured so that it can only be controlled by a specific task control device.

Fig. 7 is a diagram showing a system configuration according to the third embodiment of the present invention. The vehicle control device 50 comprises the task control device designation device 45 and a task control device identification section 64. The task control device designation device 45 and the task control device identification section 64 are connected to the task control section 52. Note that, although the example in Fig. 7 is the second embodiment (Fig. 5) with modification added, it may be the first embodiment (Fig. 3) with modification added.

The task control device designation device 45 and the task control device identification section 64 receive input of the task control device identification information for identifying a specific task control device 40. For example, the task control device designation device 45 is provided with three buttons on which respective different numbers are displayed so that three task control devices can be selected, and the task control device identification information corresponds to the numbers displayed on the buttons.

The task control device designation device 45 receives input of the task control device identification information and transmits this to the task control device identification section 64. The task control device identification section 64 receives this and designates the task control device 40 for the task control section 52. The task control section 52 is configured so that it follows only the task control information from the task control device 40 designated by the task control device identification section 64. Note that, the task control device designation device 45 and the task control device identification section 64 are not only able to designate a specific task control device 40 but also may automatically designate the task control device 40 that first transmitted the task control information as the specific task control device.

The task control section 52 does not allow the task to be executed if the task control device identification information included in the task control information and the task control device identification information inputted from the task control device identification section 64 do not match.

If the both task control device identification information match, the task control section 52 may perform control similar to the first or the second embodiment.

According to the above work machine control system of the third embodiment, a single task control device 40 can instruct a plurality of work machines 1, so works can be executed efficiently. Also, even if task control is transmitted from a plurality of task control devices 40 to a single work machine 1, it can be moved according only to the specific task control device 40, so it does not move unexpectedly.

In the first to the third embodiments above, the task control device 40 does not have to comprise all shown input devices and one or more input devices may be omitted. For example, any of the start instruction input device 41, the stop instruction input device 42, the speed instruction input device 43 and the task switching input device 44 of Fig. 2 may be omitted.

### Reference Signs List

- 1: Work machine
- 5: Boom cylinder (actuator)
- 6: Arm cylinder (actuator)
- 7: Bucket cylinder (actuator)
- 40: Task control device
- 41: Start instruction input device
- 42: Stop instruction input device
- 43: Speed instruction input device
- 44 (44a,44b): Task switching input device
- 45: Task control device designation device
- 46: Task control input section
- 47: Transmission section
- 51: Receiving section
- 52: Task control section
- 54: Task content input section
- 62: Communication monitoring section
- 63: Mode switching section
- 64: Task control device identification section

All publications, patents, and patent applications cited in the present description are incorporated in the present description by being cited as they are.

## Claims

1. A work machine control system comprising:
a work machine that generates movement plan information indicating movement of each portion of the work machine based on task content information including information identifying a work and information representing a spot where the work should be done and that executes a task automatically as a work to be executed based on the movement plan information; and
a task control device (40), held by a worker performing a work around the work machine, for controlling execution of the task being executed automatically,
wherein the work machine comprises a hydraulic actuator and a vehicle body control device used for executing the task,
wherein the task control device (40) comprises:
a task control input section (46) for receiving input of task control information including a start instruction and a stop instruction of the task; and
a transmission section (47) for transmitting the task control information to the vehicle body control device,
wherein the vehicle body control device comprises:
a task content input section (54) for receiving input of the task content information from an external system in order to generate the movement plan information for executing the task automatically;
a receiving section (51) for receiving the task control information transmitted from the task control device (40);
a task control section (52) that can change configuration of automatic execution of the task based on the task control information;
an electromagnetic proportional valve control section configured to control the electromagnetic proportional valve for controlling the hydraulic actuator; and
a movement control section for:
calculating a speed instruction of the hydraulic actuator based on the movement plan information;
outputting the speed instruction to the electromagnetic proportional valve control section; and
changing configuration related to automatic execution of the task upon outputting the speed instruction to the electromagnetic proportional valve control section based on the task control information from the task control section (52).

2. The work machine control system according to claim 1,
wherein the task control device (40) comprises:
a start instruction input device (41) for receiving input of the start instruction; and
a stop instruction input device (42) for receiving input of the stop instruction.

3. The work machine control system according to claim 1, wherein:
the task control information includes a speed instruction of the task; and
the task control device (40) comprises a speed instruction input device (43) for receiving input of the speed instruction.

4. The work machine control system according to claim 1, wherein:
the task content information includes information related to a plurality of tasks;
the task control information includes a task switching instruction for switching the tasks; and
the task control device (40) comprises a task switching input device (44) for receiving input of the task switching instruction.

5. The work machine control system according to claim 1, wherein:
the work machine can move in a task control movement mode wherein the work machine moves based on control by the task control section (52);
the vehicle body control device comprises a mode switching section (63) for switching a movement mode of the work machine to the task control movement mode and another mode.

6. The work machine control system according to claim 1, wherein:
the vehicle body control device comprises a communication monitoring section (62) for monitoring communication condition of the task control information; and
if it is determined that there is communication failure in communication of the task control information, the movement control section stops execution of the task.

7. The work machine control system according to claim 1, wherein:
the task control information includes task control device (40) identification information for identifying the task control device (40); and
the work machine comprises a task control device (40) identification section for receiving input of the task control device (40) identification information.

8. The work machine control system according to claim 7, wherein the task control section (52) does not allow the task to be executed if the task control device (40) identification information included in the task control information and the task control device identification information inputted from the task control device identification section (64) do not match.

## Patentansprüche

1. Arbeitsmaschinensteuersystem, das Folgendes umfasst:
eine Arbeitsmaschine, die basierend auf Aufgabeninhaltsinformationen, die Informationen, die eine Arbeit identifizieren, und Informationen, die eine Stelle bezeichnen, an dem die Arbeit verrichtet werden soll, enthalten, Bewegungsplaninformationen erzeugt, die die Bewegung jedes Teils der Arbeitsmaschine anzeigen, und die basierend auf den Bewegungsplaninformationen eine Aufgabe als eine auszuführende Arbeit automatisch ausführt; und
eine Aufgabensteuervorrichtung (40), die von einem Arbeiter gehalten wird, der um die Arbeitsmaschine eine Arbeit ausführt, um die Ausführung der Aufgabe, die automatisch ausgeführt wird, zu steuern,
wobei die Arbeitsmaschine einen hydraulischen Aktuator und eine Fahrzeugkörper-Steuervorrichtung, die zum Ausführen der Arbeit verwendet wird, umfasst,
wobei die Aufgabensteuervorrichtung (40) Folgendes umfasst:
einen Aufgabensteuerungs-Eingabeabschnitt (46) zum Empfangen von Aufgabensteuerinformationen, die eine Startanweisung und eine Stoppanweisung der Aufgabe enthalten; und
einen Übertragungsabschnitt (47) zum Übertragen der Aufgabensteuerinformationen zu der Fahrzeugkörper-Steuervorrichtung,
wobei die Fahrzeugkörper-Steuervorrichtung Folgendes umfasst:
einen Aufgabeninhalt-Eingabeabschnitt (54) zum Empfangen der Eingabe der Aufgabeninhaltsinformationen von einem externen System, um die Bewegungsplaninformationen zur automatischen Ausführung der Aufgaben zu erstellen;
einen Empfangsabschnitt (51) zum Empfangen der Aufgabensteuerinformationen, die von der Aufgabensteuervorrichtung (40) übertragen werden;
einen Aufgabensteuerabschnitt (52), der die Konfiguration der automatischen Ausführung der Aufgabe basierend auf den Aufgabensteuerinformationen verändern kann;
einen Steuerabschnitt für elektromagnetische Proportionalventile, der konfiguriert ist, das elektromagnetische Proportionalventil zum Steuern des hydraulischen Aktuators zu steuern; und
einen Bewegungssteuerabschnitt zum:
Berechnen einer Geschwindigkeitsanweisung des hydraulischen Aktuators basierend auf den Bewegungsplaninformationen;
Ausgeben der Geschwindigkeitsanweisung an den Steuerabschnitt für elektromagnetische Proportionalventile; und
Verändern der Konfiguration bezüglich der automatischen Ausführung der Aufgabe nach dem Ausgeben der Geschwindigkeitsanweisung an den Steuerabschnitt für elektromagnetische Proportionalventile basierend auf den Aufgabensteuerinformationen von dem Aufgabensteuerabschnitt (52).

2. Arbeitsmaschinensteuersystem nach Anspruch 1,
wobei die Aufgabensteuervorrichtung (40) Folgendes umfasst:
eine Startanweisungs-Eingabevorrichtung (41) zum Empfangen der Eingabe der Startanweisung; und
eine Stoppanweisungs-Eingabevorrichtung (42) zum Empfangen der Eingabe der Stoppanweisung.

3. Arbeitsmaschinensteuersystem nach Anspruch 1, wobei:
die Aufgabensteuerinformationen eine Geschwindigkeitsanweisung der Aufgabe enthalten; und
die Aufgabensteuervorrichtung (40) eine Geschwindigkeitsanweisungs-Eingabevorrichtung (43) zum Empfangen einer Eingabe der Geschwindigkeitsanweisung umfasst.

4. Arbeitsmaschinensteuersystem nach Anspruch 1, wobei:
die Aufgabeninhaltsinformationen Informationen bezüglich mehrerer Aufgaben enthalten;
die Aufgabensteuerinformationen eine Aufgabenumschaltanweisung zum Umschalten der Aufgaben enthalten; und
die Aufgabensteuervorrichtung (40) eine Aufgabenumschalt-Eingabevorrichtung (44) zum Empfangen einer Eingabe der Aufgabenumschaltanweisung umfasst.

5. Arbeitsmaschinensteuersystem nach Anspruch 1, wobei:
die Arbeitsmaschine sich in einem Aufgabensteuerungs-Modus bewegen kann, wobei sich die Arbeitsmaschine basierend auf der Steuerung durch den Aufgabensteuerabschnitt (52) bewegt;
die Fahrzeugkörper-Steuervorrichtung einen Modus-Umschaltabschnitt (63) zum Umschalten eines Bewegungsmodus der Arbeitsmaschine in den Aufgabensteuerungs-Bewegungsmodus und einen weiteren Modus umfasst.

6. Arbeitsmaschinensteuersystem nach Anspruch 1, wobei:
die Fahrzeugkörper-Steuervorrichtung einen Kommunikationsüberwachungsabschnitt (62) zum Überwachen des Kommunikationszustands der Aufgabensteuerinformationen umfasst; und
dann, wenn bestimmt worden ist, dass in der Kommunikation der Aufgabensteuerinformationen eine Kommunikationsstörung vorhanden ist, der Bewegungssteuerabschnitt die Ausführung der Aufgabe beendet.

7. Arbeitsmaschinensteuersystem nach Anspruch 1, wobei:
die Aufgabensteuerinformationen Identifizierungsinformationen der Aufgabensteuervorrichtung (40) zum Identifizieren der Aufgabensteuervorrichtung (40) enthält; und
die Arbeitsmaschine einen Identifizierungsabschnitt für die Aufgabensteuervorrichtung (40) zum Empfangen der Eingabe der Identifizierungsinformationen von der Aufgabensteuervorrichtung (40) umfasst.

8. Arbeitsmaschinensteuersystem nach Anspruch 7, wobei der Aufgabensteuerabschnitt (52) nicht erlaubt, dass die Aufgabe ausgeführt wird, wenn die Identifizierungsinformationen der Aufgabensteuervorrichtung (40), die in den Aufgabensteuerinformationen enthalten sind, und die Identifizierungsinformationen der Aufgabensteuervorrichtung, die von dem Identifizierungsabschnitt (64) für die Aufgabensteuervorrichtung eingegeben werden, nicht übereinstimmen.

## Revendications

1. Système de commande de machine de chantier comprenant :
une machine de chantier qui génère des informations de plan de déplacement indiquant un déplacement de chaque portion de la machine de chantier sur la base d'informations de contenu de tâche incluant des informations identifiant un travail et des informations représentant un point auquel le travail devrait être effectué, et qui exécute une tâche de manière automatique en tant que travail à exécuter sur la base des informations de plan de déplacement ; et
un dispositif de commande de tâche (40), tenu par un travailleur effectuant un travail autour de la machine de chantier, destiné à commander une exécution de la tâche qui est exécutée de manière automatique,
dans lequel la machine de chantier comprend un actionneur hydraulique et un dispositif de commande de corps de véhicule utilisés pour exécuter la tâche,
dans lequel le dispositif de commande de tâche (40) comprend :
une section d'entrée de commande de tâche (46) destinée à recevoir une entrée d'informations de commande de tâche incluant une instruction de démarrage et une instruction d'arrêt de la tâche, et
une section de transmission (47) destinée à transmettre les informations de commande de tâche au dispositif de commande de corps de véhicule,
dans lequel le dispositif de commande de corps de véhicule comprend :
une section d'entrée de contenu de tâche (54) destinée à recevoir une entrée des informations de contenu de tâche provenant d'un système externe afin de générer les informations de plan de déplacement pour exécuter la tâche de manière automatique,
une section de réception (51) destinée à recevoir les informations de commande de tâche transmises par le dispositif de commande de tâche (40) ;
une section de commande de tâche (52) qui peut changer une configuration d'exécution automatique de la tâche sur la base des informations de commande de tâche ;
une section de commande de vanne proportionnelle électromagnétique configurée pour commander la vanne proportionnelle électromagnétique destinée à commander l'actionneur hydraulique ; et
une section de commande de déplacement destinée à :
calculer une instruction de vitesse de l'actionneur hydraulique sur la base des informations de plan de déplacement ;
sortir l'instruction de vitesse vers la section de commande de vanne proportionnelle électromagnétique ; et
changer une configuration relative à une exécution automatique de la tâche lors de la sortie de l'instruction de vitesse vers la section de commande de vanne proportionnelle électromagnétique sur la base des informations de commande de tâche provenant de la section de commande de tâche (52).

2. Système de commande de machine de chantier selon la revendication 1,
dans lequel le système de commande de tâche (40) comprend :
un dispositif d'entrée d'instruction de démarrage (41) destiné à recevoir une entrée de l'instruction de démarrage ; et
un dispositif d'entrée d'instruction d'arrêt (40) destiné à recevoir une entrée de l'instruction d'arrêt.

3. Système de commande de machine de chantier selon la revendication 1, dans lequel :
les informations de commande de tâche incluent une instruction de vitesse de la tâche ; et
le dispositif de commande de tâche (40) comprend un dispositif d'entrée d'instruction de vitesse (43) destiné à recevoir une entrée de l'instruction de vitesse.

4. Système de commande de machine de chantier selon la revendication 1,
dans lequel :
les informations de contenu de tâche incluent des informations relatives à une pluralité de tâches ;
les informations de commande de tâche incluent une instruction de commutation de tâche destinée à commuter entre les tâches ; et
le dispositif de commande de tâche (40) comprend un dispositif d'entrée de commutation de tâche (44) destiné à recevoir une entrée de l'instruction de commutation de tâche.

5. Système de commande de machine de chantier selon la revendication 1, dans lequel :
la machine de chantier peut se déplacer dans un mode de déplacement de commande de tâche dans lequel la machine de chantier se déplace sur la base d'une commande par la section de commande de tâche (52) ;
le dispositif de commande de corps de véhicule comprend une section de commutation de mode (63) destinée à commuter un mode de déplacement de la machine de chantier vers un mode de déplacement de commande tâche et un autre mode.

6. Système de commande de machine de chantier selon la revendication 1, dans lequel :
le dispositif de commande de corps de véhicule comprend une section de surveillance de communication (62) destinée à surveiller une condition de communication des informations de commande de tâche ; et
s'il est déterminé qu'il y a une défaillance de communication dans une communication des informations de commande de tâche, la section de commande de déplacement arrête l'exécution de la tâche.

7. Système de commande de machine de chantier selon la revendication 1,
dans lequel :
les informations de commande de tâche incluent des informations d'identification de dispositif de commande de tâche (40) destinées à identifier le dispositif de commande de tâche (40) ; et
la machine de chantier comprend une section d'identification de dispositif de commande de tâche (40) destinée à recevoir une entrée des informations d'identification du dispositif de commande de tâche (40).

8. Système de commande de machine de chantier selon la revendication 7, dans lequel la section de commande de tâche (52) ne permet pas à la tâche d'être exécutée si les informations d'identification de dispositif de commande de tâche (40) incluses dans les informations de commande de tâche et les informations d'identification de dispositif de commande de tâche entrées depuis la section d'identification de dispositif de commande de tâche (64) ne correspondent pas.
